# EUROPEAN PATENT APPLICATION

(11) **EP 1 580 739 A1**
(43) Date of publication of application: **28.09.2005**
(21) Application number: 04075894.8
(22) Date of filing: 23.03.2004
(51) Int. Cl.: G11B 7/24, G11B 23/00, G11B 9/00, G03G 5/00, G11C 13/02

(54) **An object comprising a functional layer**

(71) Applicant: DSM IP Assets B.V., 6411 TE Heerlen (NL)
(72) Inventor: Loontjens, Jacobus Antonius, 6231 KK Meerssen (NL); Globisch, Stefan, 52538 Selfkant-Isenbruch (DE)
(74) Representative: Dorrestijn, Antoon

(57) **Abstract**

Object comprising a functional layer in which layer data storage with a high density is possible. The functional layer comprises a polymer, which polymer comprises rotaxane and/or catenane units.

A rotaxane comprises a molecular chain, around which chain a macro-cyclic compound is located, having no chemical bonding with the chain. For this reason the macro-cyclic compound is able to rotate around and/or translate along the chain. Preferably the macro-cyclic compound is locked up between two bulky groups attached to the chain.

## Description

The invention relates to an object comprising a functional layer and an object comprising such a functional layer, which functional layer has been functionalized.

Objects comprising a functional layer are known. Such an object for example is a CD or a DVD, which are used for the storage of data, for example as music, as pictures and films or as computer programs and files.

There is a need for such objects comprising a functional layer suitable for data storage with a high density, or even higher density than the known objects for that purpose. This makes it possible to make equipment smaller and it increases the possibilities in use.

Object of the present invention therefore is to provide an object comprising a functional layer in which layer data storage with a high density is possible.

Surprisingly this object is achieved because the functional layer comprises a polymer, which polymer comprises rotaxane and/or catenane units.

A rotaxane and a catenane comprise a molecular chain, around which chain a macro-cyclic compound is located, having no chemical bonding with the chain. For this reason the macro-cyclic compound is able to rotate around and/or translate along the chain. The molecular chain is also referred to in literature as "thread". Preferably the functional layer comprises a polymer, which polymer comprises rotaxane units. In a rotaxe the macro-cyclic compound is locked up between two bulky groups attached to each end of the thread.

Rotaxane is for example described by David A. Leigh et al. in Angewandte Chemie, Int. Ed. Engl. 36, No. 7 (1997), p. 728 - 731 and by Albert M. Brouwer et. al. in Science, Vol. 291, 16 maart 2001, p. 2124 - 2128. Catanene is for example described by David A. Leigh in Nature, Vol. 424, 10 July 2003, p. 174-179.

Polymers comprising rotaxane units and their preparation are for example described by J. Kidd, J.A. Loontjens et. al. in Angewandte Chemie, International Edition, Ed. 2003, 42, p.3379-3383. The rotaxane units for example are part of a polymeric chain or a molecular network. It is for example also possible for the rotaxane units to be present as side groups of a polymeric chain.

The skilled person knows how to apply the functional layer on an object, for example a carrier, for example by applying the polymers as a coating.

Good results are obtained by dissolving the polymer in a solvent, applying the so obtained solution to the object with one of the known coating techniques and by finally evaporating the solvent.

By J. Kidd, J.A. Loontjens et. al. it is described in Angewandte Chemie, International Edition, Ed. 2003, 42, p.3379-3383 to attach to both ends of a rotaxane a blocked isocynate group, to mix the so obtained rotaxane with a comonomer, for example jeffamine and to polymerize the mixture to obtain a polymer, comprising the rotaxane units. Applying the mixture to an object as a coating and by polymerizing the mixture afterwards is also a suitable process for obtaining an object comprising a functional layer according to the invention.

The invention also relates to an object comprising a functional layer, which layer has been functionalized, for example by applying information to the layer. This is for example possible by using an external stimulus, for example a very fine laser beam. Preferably the information is applied by using a 2 foton exitation laser beam or by using Atomic Force Microscopy (AFM), which technologies make it possible to apply the external stimulus to obtain a very fine pattern. By using the external stimulus it is possible to change the morphology of the surface of the functional layer, so that if the layer is treated in a pattern, the pattern is brought onto the functional layer.

It is also possible to provide further functionalities to the layer. It is for example possible to provide a surface roughness on a nano scale, so that for example the layer obtains anti-reflective properties.

A still further improved object comprising the functional layer is obtained, if the functional layer comprises a polymer comprising rotaxane or catenane units, in which units the macro-cyclic compound can be located at a first as well as at a second position. Such a position is also referred to as station. In this way it is even possible to store information at a molecular level. Preferably the polymer comprises rotaxane units for this purpose. A rotaxane suitable for that purpose is obtained, if the rotaxane comprises a first and a second group that are both suitable to physically bind the macro-cyclic compound, and at least one of the groups is prone to an external stimulus to alter its attraction to the macro-cyclic compound. In this way the groups act as the stations. Groups that are prone to external stimuli are for example described by David A. Leigh in Nature, Vol. 424, 10 July 2003, p. 174-179.

It is also possible that two or more of the groups are prone to an external stimulus to alter their attraction to the macro-cyclic compound. In this case best results are obtained if the different groups are prone to different stimuli.

By applying a first external stimulus, for example reducing the attraction for the macro-cyclic compound of the first group, the macro-cyclic compound will move away from the first group to the second group and be physically bonded by that group. If for example the attraction of the second group is reduced by a second external stimulus the macro-cyclic compound will move from the second to the first group and be physically bonded by that. In this way it is possible to place the macro-cyclic compound at one of two positions, providing a 0 or 1 position for data storage. The macro-cyclic compound is also understood to be at one of the two positions, if it is preferentially at this one position, for example if the compound is translating frequently from the first to the second position, but if it is for more than 50% located at the first position.

Example of the invention will be given below, however without limiting the scoop of the invention.

### Examples 1-3

### Preparation of the rotaxane:

Three different rotaxanes (one suitable for positioning the macro-cycle in the mainchain, the second one suitable for positioning the macro-cycle in the sidechain and the third one for positioning the macro-cycle in a network) were prepared according to J. Kidd, J.A. Loontjens and co-authors in Angewandte Chemie, International Edition, Ed. 2003, 42, p.3379-3383. About the same yields were obtained.

### Preparation of the polymer comprising the rotaxane units:

A mixture of the rotaxane and Jeffamine® D400 (1.0 eq for the first and the second rotaxane, 2.0 eq for the third rotaxane) were dissolved in dichloromethane and mixed thoroughly. The solvent was removed under reduced pressure and the dry mixture heated to 175 °C under an atmosphere of nitrogen for one hour. After cooling at room temperature a colorless solid was obtained that was dissolved in dichloromethane, followed by precipitation into diethylether. The resultant solid was filtered and dried to obtain the polymer comprising the rotaxane units as a colorless solid.

### Preparation of polymer films:

The polyrotaxanes are pressed for 20 minutes at 180 °C between two mylar foils to get a flat film with a low roughness. The films did not adhere to the mylar foils, so that it easily could be removed. The resulting films have a thickness of 0.4 mm and average roughness of 4 nm.

### Analysis of the surface properties:

The roughness of the films was measured before and after UV-illumination. For this purpose AFM images were taken in air using a Nanoscope™ llla (digital instrument) equipped with a J-Scanner. The scan were carried out in the Tapping Mode. The images are shown below.

### Changing the surface properties:

To change the surface properties the film is irradiated with UV-Light (254 nm) for 15 minutes.

### Changes in the surface properties:

The surface of the film before UV- illumination has a mean roughness of approx. 4 nm and a maximum height of 14 nm.

After UV illumination the mean Roughness becomes approx. 47 nm and the maximum height increases to more than 100 nm.

### Comparative example A.

Blank samples (same system without macro-cycle and other polymers containing a fumaric-/maleic acid system) show no changes in surface properties.

It was clearly observed by the surface roughness measurements that the films comprising the polymer comprising the rotaxane units can easily be surface modified, suitable for example for data storage, while the film not comprising this polymer was not affected.

### SPM images of the films comprising the polymer, which polymer comprises the first rotaxane.

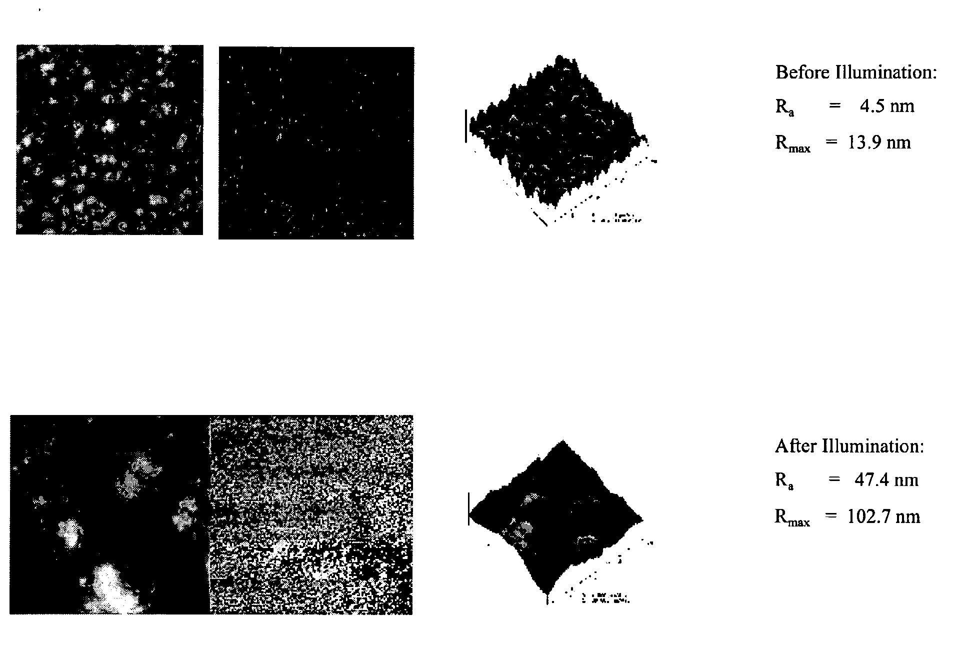

### Example 2. Polymer comprising rotaxane, suitable for storage of information at molecular level:

### Preparation of the rotaxanes:

### Preparation of N-(2,2-diphenylethyl)-succinamic acid

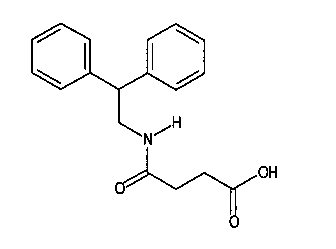

To a stirred solution of succinic anhydride (5.06 g, 50.6 mmol) in anhydrous THF (50 mL) was added at RT drop wise a solution of 2,2-Diphenylethylamine (10.0 g, 50.6 g) in anhydrous THF (60 mL). After 16 h the solvent was removed under reduced pressure and the resulting colorless solid recrystallized in dichloromethane. Yield: 83 %

### Preparation of N-(10-aminodecyl)-N'-(2,2-diphenylethyl)-succinamide

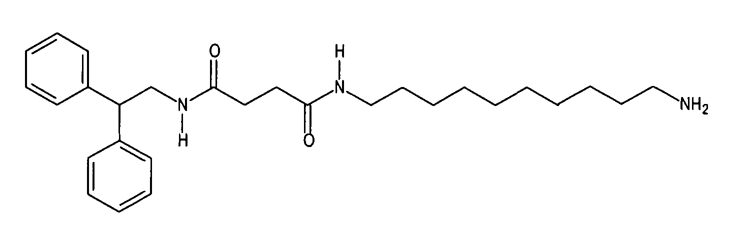

A solution of N-(2,2-diphenylethyl)-succinamic acid (2.5 g, 8.5 mmol), N-BOC-decyldiamine (2.4 g, 8.5 mmol) and 4- dimethylaminopyridin (0.2 g, 1.5 mmol) in Chloroform (150 mL) was stirred at 0°C for 10 minutes followed by addition of EDCI-HCI (1.5 g, 8 mmol). After 16 h the reaction mixture was washed with 1 N HCI, saturated NaHCO₃ and brine. After that the product was dried over MgSO₄, filtered and the filtrate concentrated to give a colorless solid. 100 mL of ethyl acetate and 100 mL 4 N HCI were added and the mixture stirred at room temperature. After 6 h the solution was neutralized with 3 N NaOH and washed with 1 N NaOH, brine, dried over anhydrous MgSO₄, filtered and the filtrate concentrated to give the product as a colorless solid. Yield: 45 %

### Preparation of N⁴,N⁴-bis(6-{[(2-oxo-1-azepanyl)carbonyl]amino}hexyl)-malenamid acid

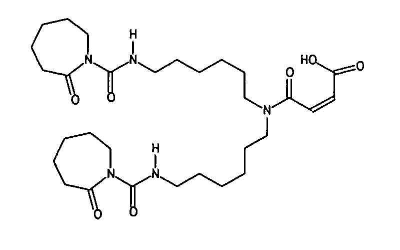

To a stirred solution of maleic acid anhydride (5.0 g, 50.6 mmol) in anhydrous THF (50 mL) was added at room tempearature drop wise a solution of 2-oxo-N-{6-[(6-{{(2-oxo-1-azepanyl)carbonyl}amino} hexyl)amino]hexyl}-1-azepane carboxamide (38.0 g, 50.6 mmol) in anhydrous THF (150 mL). After 16 h the THF was removed under reduced pressure and the resulting product taken up with chloroform (100 mL) and washed with a solution of 1 N NaOH and Water. After that the so obtained mixture comprising the product and the chloroform was dried over magnesiumsulfate, filtered and the cloroform was removed under reduced pressure to obtain a colorless solid, which was recrystallized from dichloromethane. Yield: 91 %

### Preparation of the "Thread".

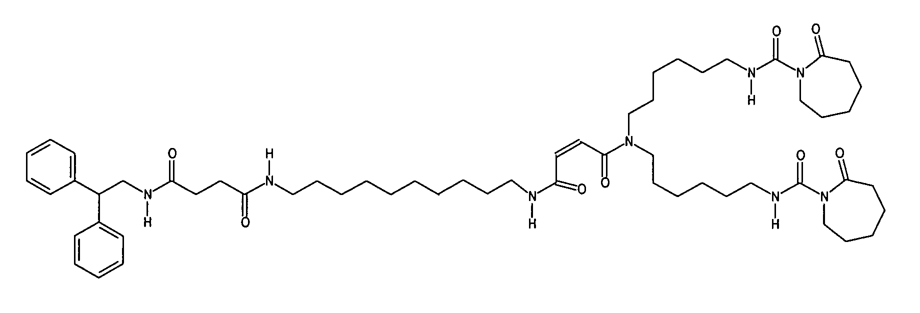

Dicyclohexylcarbodiimide (1.21 g, 5.9 mmol) was added to a stirred solution of N⁴,N⁴-bis(6-{[(2-oxo-1-azepanyl)carbonyl]amino}hexyl)-malenamid acid (3.37 g, 5.9 mmol), N-(10-Aminodecyl)-N'-(2,2-diphenylethyl)-succinamide (2.5 g, 5.7 mmol) and 4-dimethylaminopyridine (0.15 g, 1.2 mmol) in anhydrous tetrahydrofuran (20 mL). The resultant mixture was stirred for twelve hours at room temperature and then filtered to remove precipitated dicyclohexylurea. After that the mixture was dried over MgSO₄, filtered and the filtrate concentrated to give a yellow solid that was subjected to column chromatography using a solvent gradient of chloroform to chloroform/methanol (95/5) to obtain a colorless solid. Yield: 28 %

### Preparation of the rotaxane (macro-cycle at succinic amid)

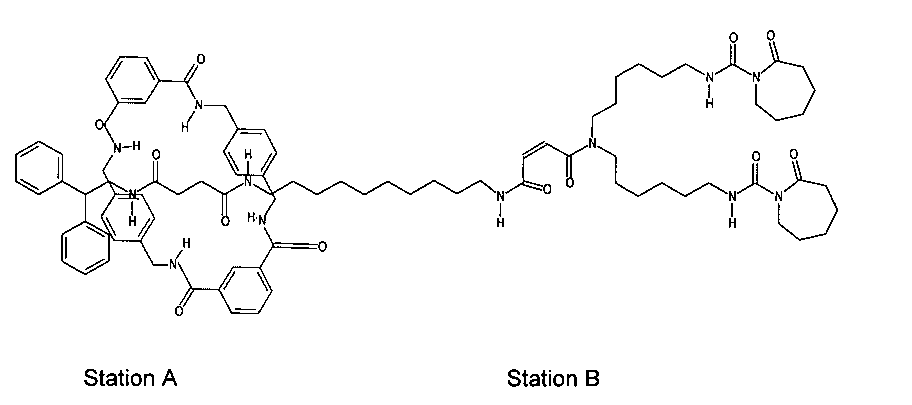

Separate solutions of isophthaloyl chloride (1.98 g, 9.7 mmol) and p-xylylene diamine (1.32 g, 9.7 mmol) in anhydrous chloroform (50 mL each) were added drop wise via syringe to a stirred solution of the "thread" (0.75 g, 0.8 mmol) and triethylamine (1.97 g, 19.5 mmol) also in anhydrous chloroform (100 mL) over a period of two hours. After which time, ethanol (10 mL) was added and the reaction filtered. The resultant solution was washed with distilled water (2 x 250 mL) followed by 0.2 M hydrochloride acid (2 x 250 mL) and the saturated aqueous sodium hydrogen carbonate solution (2 x 250 mL). The resulting product was then dried over magnesium sulfate and the solvent was removed under reduced pressure to afford a pale yellow solid that was subjected to column chromatography using a solvent THF/chloroform (1/2) to obtain a colorless solid.
Yield: 25 %

(H-NMR proves that the macro-cycle is at the succinamid (Station A; protons are shifting from 2.39 ppm to 0.95 ppm in CHCl₃) while the signals from the maleic amid (Station B) are still at the same position (6.2 and 5.9 ppm).

### Preparation of the polymer comprising the rotaxane:

The polymer comprising the rotaxane is prepared according to the method described earlier. We obtained comparable yields.

### Thermal isomerization

The polymer comprising the rotaxane is heated under Nitrogen for 6 days at 120°C.

H-NMR proves that the macro-cycle moved away from station A to station B. (Signals from succinamid with macro-cycle close to it 0.95 ppm in CHCl₃ vanishes)

### Photochemical isomerization

The heated polyrotaxane is irradiated for 1 h with UV-Light (254 nm).

(H-NMR proves that the macro-cycle moved again to station A. (Signals from succinamid with macro-cycle close to it at 0.95 ppm in CHCl₃ are visible))

### Storing information by moving of the macro-cycle

H-NMR proves that the macro-cycle is moved from station A (succinamid) to Station B (maleic amid/fumaric amid) and back by external stimulation. This allows storing information on a molecular level by moving the macro-cycle.

## Claims

1. Object comprising a functional layer, **characterized in that** the functional layer comprises a polymer, which polymer comprises rotaxane and/or catenane units.

2. Object comprising a functional layer as claimed in claim 1, which functional layer has been functionalized.
